# EUROPEAN PATENT APPLICATION

(11) **EP 4 744 559 A1**
(43) Date of publication of application: **20.05.2026**
(21) Application number: 25192477.5
(22) Date of filing: 29.07.2025
(51) Int. Cl.: A47K 3/28, F24D 17/00, F24S 20/00, F24S 60/30, F16L 37/56

(54) **WATERWAY SEALING STRUCTURE AND SOLAR SHOWER COLUMN APPLYING THE SAME**

(30) Priority: 18.11.2024 CN 202422821491 U
(71) Applicant: Wang, Yin, Jinhua City 321016 (CN)
(72) Inventor: ZHANG, Xiaodong, Jinhua City, 321032 (CN); YE, Ruiming, Jinhua City, 321035 (CN)
(74) Representative: Pons IP

(57) **Abstract**

The present disclosure discloses a waterway sealing structure, which comprises a column waterway sealing structure. The column waterway sealing structure further comprises: an upper column connecting cover sleeved at the lower end of the upper column of the solar shower column and provided with four arc-shaped slots extending circumferentially and uniformly spaced, with each arc-shaped slot having a slot open section and a slot locking section; and a lower column connecting cover sleeved at the upper end of the lower column of the solar shower column.

## Description

### CROSS-REFERENCE TO RELATED APPLICATIONS

This application claims priority to Chinese Utility Model Patent Application No. 2024228214918, titled "Waterway Sealing Structure and Solar Shower Column Applying the Same," filed on November 18, 2024, the content of which, including the amendments thereof, is incorporated herein by reference in its entirety.

### TECHNICAL FIELD

The present disclosure relates to the technical field of shower equipment, and particularly to a waterway sealing structure and a solar shower column applying this structure.

### BACKGROUND

A solar shower column absorbs solar energy through solar thermal collection facilities and converts it into thermal energy. The collection facilities are generally wrapped with heat-absorbing materials and are used to heat the cold water inside in real time. The heated water is then mixed with cold water from external pipelines, making it suitable for outdoor use, such as beach showers. Typically, the solar thermal collection facilities are responsible for absorbing solar energy and converting it into thermal energy, while a water storage tank stores the heated water. The column structure of the solar shower column integrates the solar thermal collection facilities and the water storage tank into one unit. Specifically, the surface of the column structure may use black heat-absorbing materials as the collection facilities, while the internal space of the column serves as the water storage tank. By connecting the waterway inside the column, the shower head, and the shower switch, a simple outdoor shower that is easy to assemble and disassemble can be constructed, using only solar energy to obtain hot water for showers.

Chinese patent application CN201098053Y discloses a detachable solar water heater, which utilizes solar radiation to provide hot, warm, and cold water for showers. It includes upper and outer pipes, double-layer end caps sealing both ends, a supporting base, connector components on the pipe wall for sealed water source connections, as well as inlet pipes, outlet pipes, and cold water pipes inside the pipes, all connected to a three-way valve body and its operating handle, a tee at the top of the cold water pipe, and a spray head. The upper, outer, and cold water pipes are connected to the three-way valve body via upper inner plugs, lower inner plugs, locking rings, pipe joints, inner joints, and intermediate joints, forming a structure that can be easily disassembled or reassembled for sealed connections. This reduces packaging, storage, and transportation dimensions, facilitates disassembly for maintenance or part replacement, and is suitable for installation in places such as beach baths and outdoor swimming pools.

The waterway sealing structure in such solutions, particularly the column waterway sealing, generally uses threaded connections, which are inconvenient to assemble and disassemble and cannot effectively ensure sealing performance.

Therefore, there is an urgent need for a waterway sealing structure that ensures sealing performance while being easy to assemble and disassemble, as well as a solar shower column applying this structure.

The information disclosed in this background section is intended only to enhance the understanding of the general background of the present disclosure and should not be taken as an acknowledgment or any form of suggestion that this information constitutes prior art already known to those of ordinary skill in the field.

### SUMMARY

An object of the present disclosure is to provide a waterway sealing structure and a solar shower column applying this structure, which can be easily assembled and disassembled while ensuring sealing performance.

To achieve the above object, according to a first aspect of the present disclosure, provided is a waterway sealing structure applied in a solar shower column, at least comprising a column waterway sealing structure. The column waterway sealing structure further comprises: an upper column connecting cover sleeved at a lower end of an upper column of the solar shower column and provided with four arc-shaped slots extending circumferentially and uniformly spaced, each of the arc-shaped slots having a slot open section and a slot locking section; a lower column connecting cover sleeved at an upper end of a lower column of the solar shower column and provided with four arc-shaped buckles extending circumferentially and uniformly spaced, wherein a size of the arc-shaped buckles is compatible with both the slot open section and the slot locking section of the arc-shaped slots; and wherein during the rotation of the upper column connecting cover relative to the lower column connecting cover, the arc-shaped buckles slide from the slot open section to the slot locking section, forming a locking between the upper column connecting cover and the lower column connecting cover; an intermediate sealing ring arranged in a sealing ring placement groove inside the lower column connecting cover, wherein when the upper column connecting cover and the lower column connecting cover are locked, the intermediate sealing ring is compressed and wrapped bidirectionally by the upper column connecting cover and the lower column connecting cover, forming column waterway sealing upon connection of the upper column and the lower column.

Further, in the above technical solution, the open section is located on the rotation start side of the arc-shaped slot, and the locking section is located on the rotation end side of the arc-shaped slot; the locking section has an outer locking slope and an inner locking slope, used to form compression and wrapping on the intermediate sealing ring by the upper and lower column connecting covers when the arc-shaped buckles slide from the open section to the locking section.

Further, in the above technical solution, one of the four arc-shaped slots may have a slot protrusion, and correspondingly, one of the four arc-shaped buckles may have a buckle recess.

Further, in the above technical solution, an outer edge surface of the upper column connecting cover is provided with an upper column connecting cover embossing; an outer edge surface of the lower column connecting cover is provided with a lower column connecting cover indentation and a lower column connecting cover embossing; the upper column connecting cover is at a rotation starting position when the upper column connecting cover embossing is aligned with the lower column connecting cover indentation, and the upper column connecting cover and the lower column connecting cover are at a locking termination position when the upper column connecting cover is rotated clockwise to align the upper column connecting cover embossing with the lower column connecting cover embossing.

Furthermore, in the above technical solution, the waterway sealing structure may further comprise a pipe waterway sealing structure for connecting a pipe to a male-female thread straight-through connector while forming pipe waterway sealing; the pipe is an aluminum-plastic composite pipe and serves as a cold water pipe installed inside the solar shower column; and the pipe waterway sealing structure further comprises: an aluminum-plastic pipe clamp sleeved over the pipe and having a protrusion structure that matches a groove at a corresponding position on a surface of the pipe; an aluminum-plastic pipe gasket that is stepped annular in shape and placed at a base at a male thread inside the male-female thread straight-through connector; and a plastic locking nut sleeved on over the aluminum-plastic pipe clamp, wherein when the plastic locking nut is rotated and forms a spiral feed with the male thread of the male-female thread straight-through connector, the aluminum-plastic pipe clamp is driven to move downward until the protrusion structure slides into the groove, at which point an end of the pipe abuts against a stepped annular surface of the aluminum-plastic pipe gasket, forming compression and sealing between the pipe and the gasket.

Furthermore, in the above technical solution, a female thread of the male-female thread straight-through connector is connected to a valve housing guide connector, and both ends of the valve housing guide connector are off-axis arranged such that a waterway at a transition point forms an axial offset, thereby avoiding obstruction during component installation.

According to a second aspect of the present disclosure, provided is a solar shower column, comprising an upper column and an lower column that are detachably connected, applying the aforementioned waterway sealing structure.

Compared to the prior art, the present disclosure offers the following advantages:
1) The present disclosure replaces the threaded connection in the prior art with a buckle-and-slot connection structure through the internal design of the upper and lower column connecting covers. This not only ensures a compact structure without occupying excessive space but also enables bidirectional compression and wrapping of the intermediate sealing ring once the upper and lower column connecting covers are connected and locked, resulting in stable connection and improved waterway sealing for the column.
2) In the mating structure of the upper and lower column connecting covers of the present disclosure, the locking section of the arc-shaped slot adopts a dual-slope design with outer and inner locking slopes, allowing smoother sliding of the arc-shaped buckle within the arc-shaped slot. Upon reaching the slope's peak plane, the buckle is precisely locked at the rotation end side of the arc-shaped slot.
3) One of the four arc-shaped slots in the present disclosure is equipped with a slot protrusion, while one of the four arc-shaped buckles correspondingly features a buckle recess. This arrangement ensures that only this specific buckle can align and insert into the corresponding slot, effectively preventing installation errors by personnel.
4) The present disclosure allowing installers to better identify the locked and unlocked states through the coordinated use of the upper column connecting cover embossing on the outer edge surface of the upper column connecting cover in coordination with the lower column connecting cover indentation and lower column connecting cover embossing on the outer edge surface of the lower column connecting cover;
5) The present disclosure achieves compression and sealing of the pipe and gasket through the coordinated use of components such as the aluminum-plastic composite pipe, plastic locking nut, aluminum-plastic pipe clamp, male-female thread straight-through connector, and aluminum-plastic pipe gasket, ensuring convenient installation and superior sealing performance;
6) The two ends of the valve housing guide connector of the present disclosure re off-axis arranged, creating axial offset in the water path at the transition. This design effectively avoids obstruction issues during component installation.

The above description serves only as an overview of the technical solution of the present disclosure. To enable a clearer understanding of the technical means of the present disclosure and facilitate implementation based on the content of the specification, as well as to make the above and other objectives, technical features, and advantages of the present disclosure more comprehensible, one or more preferred embodiments are provided below, accompanied by detailed explanations with reference to the drawings.

### BRIEF DESCRIPTION OF DRAWINGS

FIG. 1 is a perspective view of the solar shower column of the present disclosure.
FIG. 2 is a front view of the solar shower column of the present disclosure.
FIG. 3 is a cross-sectional view taken along line A-A of FIG. 2 (the green arrow indicates cold water flow, and the red arrow indicates hot water flow).
FIG. 4 is a right-side view of the solar shower column of the present disclosure.
FIG. 5 is a cross-sectional view taken along line B-B of FIG. 4.
FIG. 6 is a partial enlarged view of the circled area in FIG. 3.
FIG. 7 is a partial enlarged view of the circled area in FIG. 5.
FIG. 8 is an exploded view of the components shown in FIGS. 6 and 7.
FIG. 9 is a perspective structural view of the lower column connecting cover of the present disclosure.
FIG. 10 is a perspective structural view of the upper column connecting cover of the present disclosure.
FIG. 11 is an exploded view of the upper column connecting cover, sealing ring, and lower column connecting cover of the present disclosure.
FIG. 12 is a schematic diagram of the connection between the upper column connecting cover and the lower column connecting cover of the present disclosure (where FIG. 12-A shows the state before locking, and FIG. 12-B shows the state after locking).
FIG. 13 is a cross-sectional schematic diagram of the sealing structure for the aluminum-plastic composite pipe in the present disclosure.
FIG. 14 is an exploded schematic diagram of the components of the pipe sealing structure for the aluminum-plastic composite pipe in the present disclosure.

Key reference signs:
100-Solar shower column; 101-Upper column; 102-Lower column; 103-Base; 104-Shower head; 105-Shower switch; 106-Cold water faucet; 107-External cold water supply connector; 108-Column drain connector;
A1-First cold water pipe section; A2-Second cold water pipe section; A3-Third cold water pipe section; B-Hot water storage pipe section;
1-Aluminum-plastic composite pipe; 1A-Groove; 2-Plastic locking nut; 3-Aluminum-plastic pipe clamp; 3A-Protrusion; 4-Aluminum-plastic pipe gasket; 5-Male-female thread straight-through connector; 6-First flat sealing washer; 7-Upper column connecting cover; 71-Arc-shaped slot; 711-Slot open section; 712-Slot locking section; 7121-Outer locking slope; 7122-Inner locking slope; 713-Slot protrusion; 72-Upper column connecting cover embossing; 8-Internal rotary nipple joint; 9-O-ring; 10-Valve housing outlet quick-connect; 11-Intermediate sealing ring; 12-Lower column connecting cover; 121-Arc-shaped buckle; 1211-Buckle recess; 122-Lower column connecting cover indentation; 123-Lower column connecting cover embossing; 13-Second flat sealing washer; 14-Valve housing guide connector; 15-Guide head fixing screw; 16-18L vave housing.

### DESCRIPTION OF EMBODIMENTS

The following describes the detailed implementation of the present disclosure with reference to the accompanying drawings, but it should be understood that the scope of protection of the present disclosure is not limited by the specific implementation.

Unless otherwise explicitly stated, throughout the specification and claims, the term "include" or variations such as "comprise" or "contain" shall be understood to encompass the stated elements or components but not to exclude other elements or components.

In this document, for ease of description, spatial relative terms such as "below," "beneath," "lower," "above," "upper," and the like may be used to describe the relationship of one element or feature to another in the accompanying drawings. It should be understood that these spatial relative terms are intended to encompass orientations beyond those depicted in the figures, including during use or operation of the device. For example, if an object in the FIG. is inverted, an element described as being "below" or "beneath" another element would then be oriented "above" the other element. Thus, the exemplary term "below" can encompass both downward and upward orientations. Objects may also assume other orientations (rotated 90 degrees or otherwise), and the spatial relative terms used herein should be interpreted accordingly.

In this document, terms such as "first," "second," etc., are used to distinguish between two different elements or components and are not intended to specify a particular position or relative relationship. In other words, in some embodiments, terms like "first" and "second" may be interchangeable.

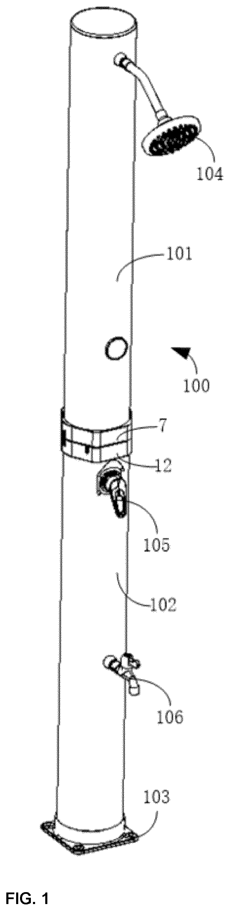

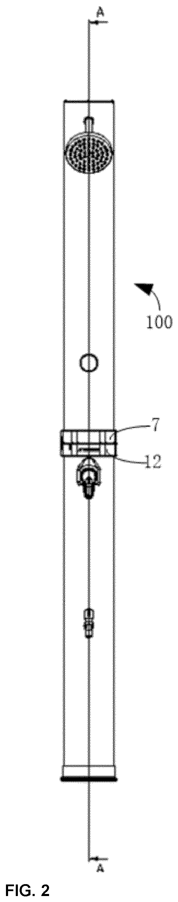

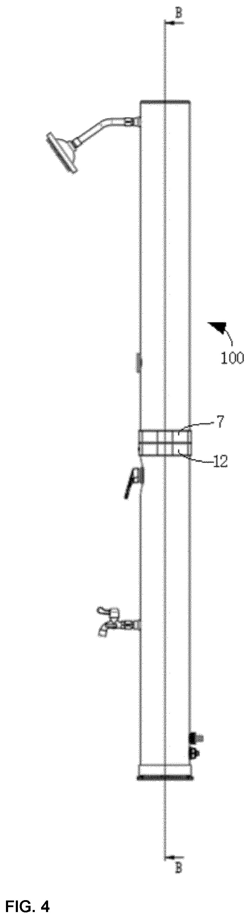

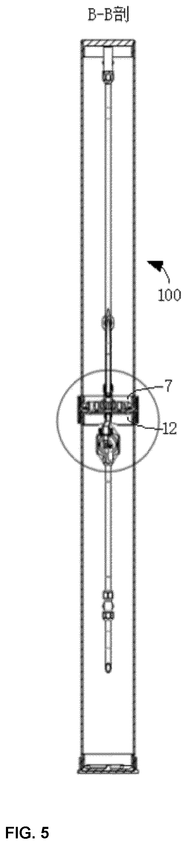

As shown in FIGS. 1 to 5, the column structure of the solar shower column in the present disclosure integrates solar heating facilities and a water storage tank into a single unit. Specifically, the surface of the column structure may use black heat-absorbing material as the heating facility, while the internal space of the column serves as the water storage tank. By connecting the waterways inside the column, the shower head 104, and the shower switch 105, a simple outdoor shower that is easy to assemble and disassemble can be formed, providing hot water for showers using only solar energy. Further, as illustrated in FIGS. 1 to 5, for ease of assembly, disassembly, and transportation, the solar shower column 100 of the present disclosure includes detachable upper column 101 and lower column 102, which can be separated or securely sealed using the upper column connecting cover 7 and lower column connecting cover 12. The upper column 101 is equipped with a shower head 104 at its top, while the upper part of the lower column 102 features a shower switch 105 (i.e., a hot and cold water mixing valve) to control the shower head 104 for dispensing cold, hot, or warm water. The mid-to-lower section of the lower column 102 includes a cold water faucet 106, which can be used for cleaning the user's legs and feet. The bottom of the lower column 102 has a base 103, allowing the solar shower column 100 of the present disclosure to be securely fixed in outdoor locations where it is needed, such as beach resorts.

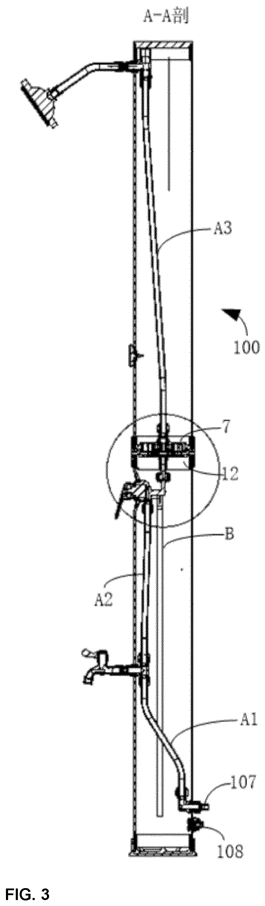

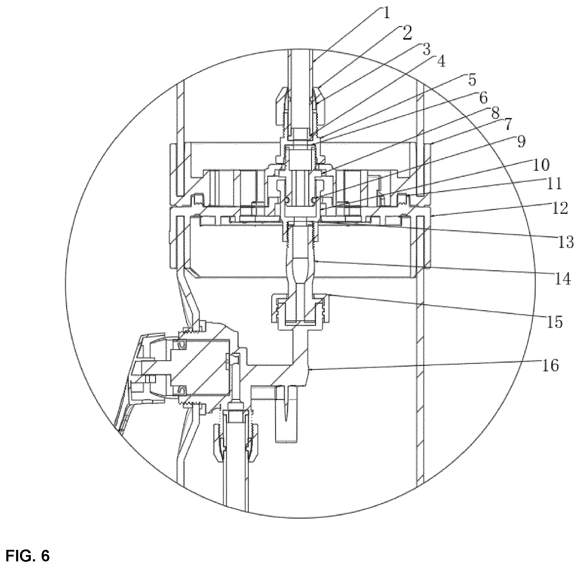

Further, as shown in FIG. 3, the upper column 101 and lower column 102 of the solar shower column 100 of the present disclosure are hollow and interconnected column structures. The surface material is made of an existing black material capable of absorbing solar energy, enabling it to heat the water inside the column. Thus, the water inside the column is real-time heated hot water, while the water in the pipes within the column is cold water, supplied by an external water supply line. Referring to FIG. 3, the present disclosure includes an external cold water supply connector 107, which can be connected to the external water supply line, near the bottom of the lower column 102. Below the external cold water supply connector 107 is a column drain connector 108, allowing the drainage screw on the connector to be unscrewed when needed to drain all water from the column. Further, as shown in FIG. 3, the cold water pipeline inside the solar shower column 100 includes multiple cold water pipe sections, including a first cold water pipe section A1, a second cold water pipe section A2, and a third cold water pipe section A3. Here, the first cold water pipe section A1 is connected to the external cold water supply connector 107 and the cold water faucet 106, the second cold water pipe section A2 is connected to the cold water faucet 106 and the shower switch 105, and the third cold water pipe section A3 is connected to the shower switch 105 and the shower head 104. The hot water storage pipe section B is connected at its upper end to the 18L valve housing 16 of the shower switch 105 (refer to FIG. 6), while the other end is open at the bottom of the lower column 102. This allows cold water to continuously replenish the bottom of the column after the hot water inside is used. Under the water pressure of the cold water, the water inside the column is continuously heated as it rises, turning the water at the top into hot water for continued use. As shown in FIG. 3, green arrows indicate the flow direction of cold water in the cold water pipe sections, while red arrows indicate the flow direction of hot water outside the pipe sections inside the column. Cold and hot water can mix at the shower head 104 at the top of the column to produce warm water for the user's needs.

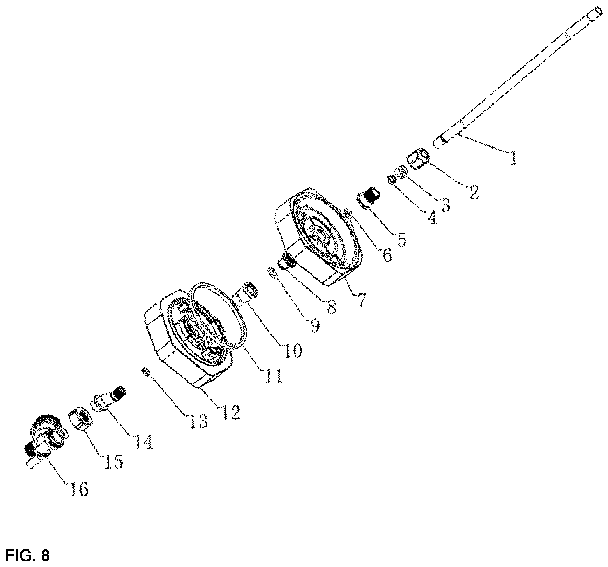

As shown in FIGS. 6 to 8, in the solar shower column 100 of the present disclosure, an upper column connecting cover 7 and a lower column connecting cover 12 inside the column are sequentially, from top to bottom, provided with and connected to an aluminum-plastic composite pipe 1 (i.e., the third cold water pipe section A3 in FIG. 3), a plastic locking nut 2, an aluminum-plastic pipe clamp 3, an aluminum-plastic pipe gasket 4, a male-female thread straight-through connector 5, a first flat sealing washer 6, the upper column connecting cover 7, an internal rotary nipple joint 8, an O-ring 9, a valve housing outlet quick-connect 10, an intermediate sealing ring 11, the lower column connecting cover 12, a second flat sealing washer 13, a valve housing guide connector 14, a guide head fixing screw 15, and a 18L valve housing 16.

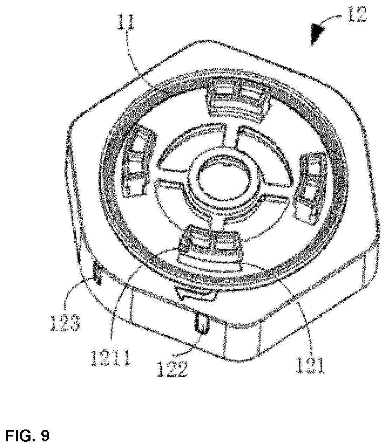

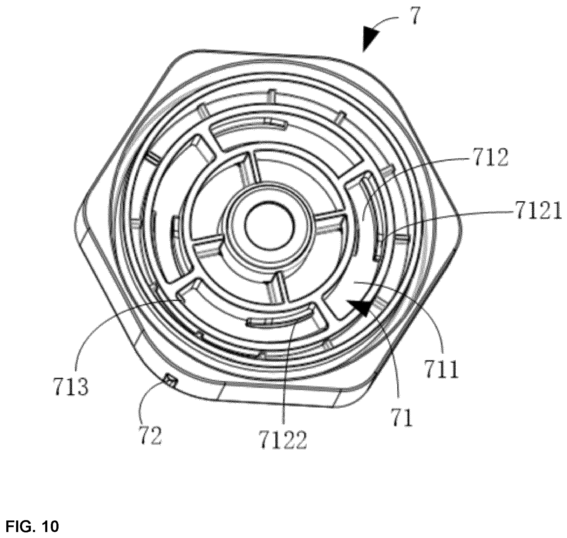

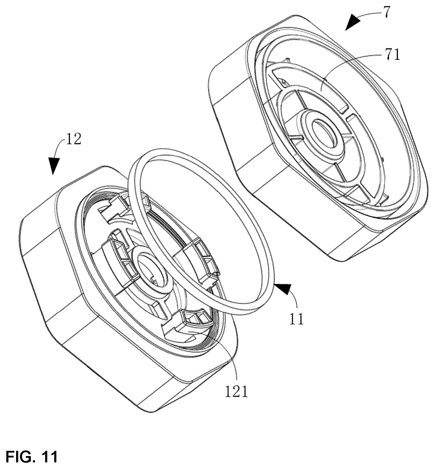

Since both the interior of the column and the cold water pipe in the present disclosure are filled with water, a relatively strict waterway sealing structure is required. To this end, as shown in FIGS. 6 to 12, the present disclosure provides a waterway sealing structure applied to the aforementioned solar shower column 100, which at least includes a column waterway sealing structure. This column waterway sealing structure further includes an upper column connecting cover 7, a lower column connecting cover 12, and an intermediate sealing ring 11. Here, the upper column connecting cover 7 is sleeved over the lower end of the upper column 101 of the solar shower column 100 (refer to FIGS. 1 to 5). The upper column connecting cover 7 is internally provided with four arc-shaped slots 71 extending circumferentially and uniformly spaced (refer to FIG. 10). The arc-shaped slot 71 has a slot open section 711 and a slot locking section 712. The lower column connecting cover 12 is sleeved over the upper end of the lower column 102 of the solar shower column 100. The lower column connecting cover 12 is internally provided with four arc-shaped buckles 121 extending circumferentially and uniformly spaced (refer to FIG. 9). The dimensions of the arc-shaped buckle 121 are compatible with both the slot open section 711 and the slot locking section 712 of the arc-shaped slot 71. During the rotation of the upper column connecting cover 7 relative to the lower column connecting cover 12, the arc-shaped buckle 121 can slide from the slot open section 711 to the slot locking section 712, forming a lock between the upper column connecting cover 7 and the lower column connecting cover 12 (i.e., when the arc-shaped buckle 121 is in the slot open section 711, it is in an unlocked state; when the arc-shaped buckle 121 is in the slot locking section 712, it is in a locked state). The intermediate sealing ring 11 is arranged in the sealing ring placement groove inside the lower column connecting cover 12. When the upper column connecting cover 7 and the lower column connecting cover 12 are locked, the intermediate sealing ring 11 is compressed and wrapped bidirectionally by the upper column connecting cover 7 and the lower column connecting cover 12, forming the column waterway sealing after the connection of the upper column 101 and the lower column 102.

Through the internal structures of the upper column connecting cover 7 and the lower column connecting cover 12 described above, the present disclosure replaces the threaded connection in the prior art with the connection structure of arc-shaped buckles 121 and arc-shaped slots 71. This not only results in a compact design that occupies minimal space but also ensures that after the upper column connecting cover 7 and the lower column connecting cover 12 are connected and locked, the intermediate sealing ring 11 is compressed and wrapped bidirectionally. This provides a stable connection and enhances the waterway sealing effect of the column.

Further, as shown in FIG. 10, the slot open section 711 is located on the rotation start side of the arc-shaped slot 71 (i.e., the unlocked position), while the slot locking section 712 is located on the rotation end side of the arc-shaped slot 71 (i.e., the locked position). The slot locking section 712 features a dual-slope design, comprising an outer locking slope 7121 and an inner locking slope 7122, which facilitates the compression and wrapping of the intermediate sealing ring 11 by the upper column connecting cover 7 and the lower column connecting cover 12 when the arc-shaped buckle 121 slides from the slot open section 711 to the slot locking section 712. This dual-slope design with the outer locking slope 7121 and the inner locking slope 7122 ensures smoother sliding of the arc-shaped buckle 121 within the arc-shaped slot 71, allowing it to securely stop at the rotation end side of the arc-shaped slot 71 upon reaching the slope's peak plane.

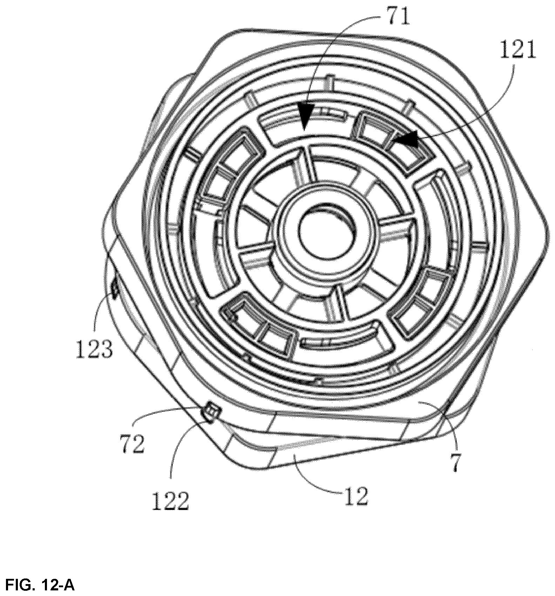

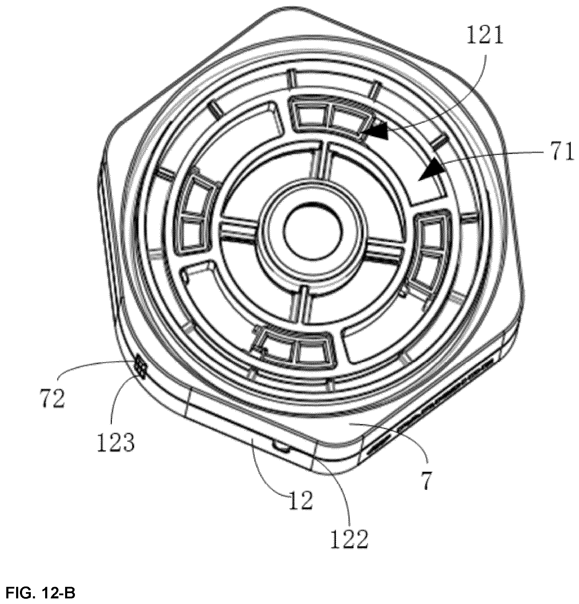

Further, as shown in FIGS. 9 and 10, preferably but not restrictively, one of the four arc-shaped slots 71 is equipped with a slot protrusion 713, while one of the four arc-shaped buckles 121 features a buckle recess 1211. This configuration ensures that only the corresponding arc-shaped buckle 121 can be inserted into the matching arc-shaped slot 71, effectively preventing installation errors. Additionally, as shown in FIGS. 9 and 10, preferably but not restrictively, the outer edge surface of the upper column connecting cover 7 is provided with an upper column connecting cover embossing 72, while the outer edge surface of the lower column connecting cover 12 is provided with a lower column connecting cover indentation 122 and a lower column connecting cover embossing 123. When the upper column connecting cover embossing 72 is aligned with the lower column connecting cover indentation 122 (refer to FIG. 12-A), the upper column connecting cover 7 is at a rotation starting position. When the upper column connecting cover 7 is rotated clockwise until the upper column connecting cover embossing 72 is aligned with the lower column connecting cover embossing 123 (refer to FIG. 12-B), the upper column connecting cover 7 and the lower column connecting cover 12 are at a locking termination position. This method enables installers to clearly identify the locked and unlocked states.

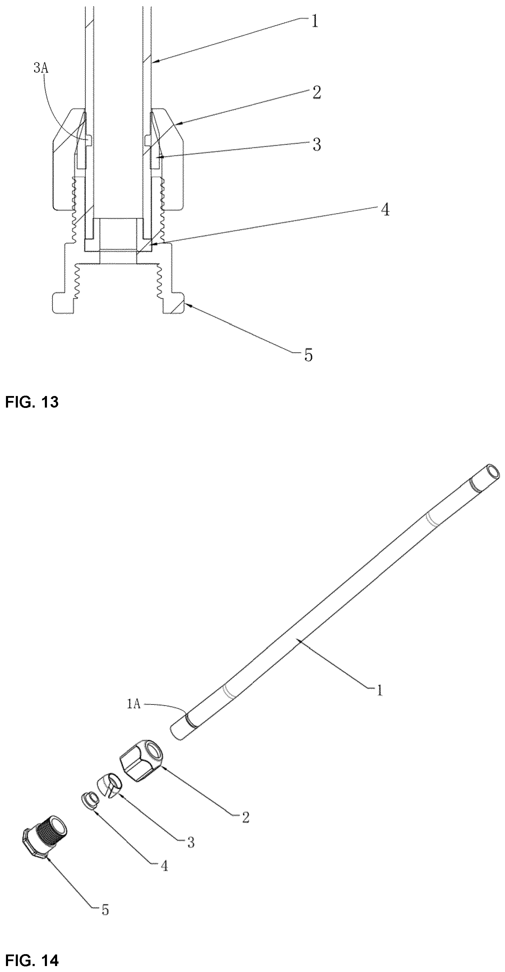

Further, as shown in FIGS. 13 and 14, the waterway sealing structure further includes a pipe waterway sealing structure, which is used to connect the pipe (i.e., the aluminum-plastic composite pipe 1 in the diagram) to the 20 turn 22 male-female thread straight-through connector (i.e., the male-female thread straight-through connector 5 in the diagram) while forming a pipe waterway seal. The pipe is made of aluminum-plastic composite pipe 1, serving as the cold water pipe inside the solar shower column 100. This pipe waterway sealing structure further includes an aluminum-plastic pipe clamp 3, an aluminum-plastic pipe gasket 4, and a plastic locking nut 2. The aluminum-plastic pipe clamp 3 is sleeved over the aluminum-plastic composite pipe 1 and features a protrusion structure (i.e., protrusion 3A), which matches the groove 1A at the corresponding position on the surface of the aluminum-plastic composite pipe 1. The aluminum-plastic pipe gasket 4 has a stepped annular shape and is placed at the base of the male thread inside the 20 turn 22 male-female thread straight-through connector (male-female thread straight-through connector 5). The plastic locking nut 2 is sleeved over the aluminum-plastic pipe clamp 3. When the plastic locking nut 2 is rotated and forms a spiral feed with the male thread of the 20 turn 22 male-female thread straight-through connector (male-female thread straight-through connector 5), it drives the aluminum-plastic pipe clamp 3 to move downward until the protrusion 3A slides into the groove 1A. At this point, the lower end of the aluminum-plastic composite pipe 1 presses against the stepped annular surface of the aluminum-plastic pipe gasket 4, creating compression and sealing between the pipe and the gasket.

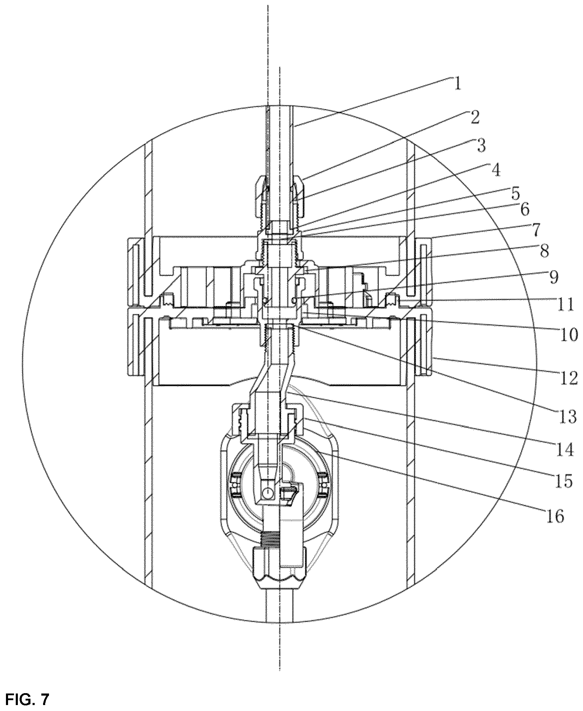

Further, as shown in FIG. 7, the female thread of the 20 turn 22 male-female thread straight-through connector (i.e., the male-female thread straight-through connector 5 in the diagram) is connected to the valve housing guide connector 14. The two ends of the valve housing guide connector 14 are off-axis arranged, causing the waterway at the transition to form an axial offset. This configuration avoids obstruction issues during the installation of components.

Referring to FIGS. 1 to 5, the present disclosure also provides a solar shower column 100 as described above, which includes detachably connected upper column 101 and lower column 102. The specific waterway sealing structure of the present disclosure is applied inside the column. This waterway sealing structure includes at least the aforementioned column waterway sealing structure and may also include the aforementioned pipe waterway sealing structure. Therefore, the solar shower column of the present disclosure achieves the same technical effects as the aforementioned waterway sealing structure, which will not be repeated here.

In other embodiments (not shown), the column structure is designed to consist of multiple standard segments (e.g., upper column segment, middle segment, middle segment, lower column segment) instead of just upper/lower segments. This accommodates users of different heights or varying hot water demands (e.g., continuous use by multiple family members). When higher water pressure or more hot water is needed, middle segments can be added. Both ends of each column segment adopt the same or similar sealing structure with arc-shaped buckles 121 as the original upper column connecting cover 7 and lower column connecting cover 12. The middle segment has two connection ends at the top and bottom. The cold water pipe (aluminum-plastic composite pipe 1) is designed for quick plugging/extension (e.g., quick-connect fittings), running through all segments to connect to the shower head 104. The hot water storage pipe section naturally spans all segments, which is highly customizable, adaptable, and more flexible for transportation, with linear increases in water storage capacity and heat collection area. The original disclosure's quick-release sealing structure with arc-shaped buckles 121 is fully utilized, applied to multiple connection points, ensuring sealing reliability after modularization.

In other embodiments (not shown), the base 103 is designed as a hollow water storage tank integrated with a small solar-powered pump. Suitable for scenarios where external water supply is inconvenient or faster heating is required (e.g., remote camps, temporary construction sites). Here, the interior of the base 103 serves as a cold water storage tank, connected via built-in pipes to the external cold water supply connector 107 (or directly integrated). A low-power solar pump (driven by heat-generated electricity from the column surface or a separate small solar panel) is integrated at the base 103 or the bottom of lower column 102. The pump actively draws cold water from the base 103 tank into the inlet at the bottom of the column (replacing or supplementing natural water pressure). This enhances water circulation, accelerates the rise and heating of cold water in the column, reduces hot water wait time, while retaining the original natural circulation design as a backup or low-power mode. It eliminates reliance on external continuous water pressure, achieving self-sufficiency, and significantly improving heating efficiency and hot water supply speed. The water storage of the base 103 provides additional buffer capacity. The core integrated heat-collection/water-storage column structure and waterway sealing design are preserved, with the integrated pump optimizing the core heating circulation principle 5.

In other embodiments (not shown), a transparent insulating cover is added to the outer surface of the column (especially the upper column 101 and the top), and an insulating layer is added to the inner or outer wall of the column. This is suitable for regions with large day-night temperature differences, short daylight hours, or high requirements for hot water insulation (such as plateaus, early spring/late autumn). A removable transparent cover (e.g., made of polycarbonate) is added to the outer layer of the column, creating a "greenhouse" effect to reduce convective heat loss and allow sunlight to penetrate and reach the black heat-absorbing surface. An insulating material layer (such as a vacuum insulation panel or polyurethane foam layer) is added to the inner wall of the column (without affecting water storage) or between the transparent cover and the black heat-absorbing layer. This significantly improves heat collection efficiency: the transparent cover reduces heat loss and may slightly increase the internal air temperature. It greatly extends the hot water insulation time: the insulating layer effectively reduces heat dissipation during nighttime or cloudy conditions. It enhances usability in extreme weather. The core heat collection function is performance-enhanced, specifically addressing potential issues of rapid heat dissipation and poor insulation in the original design while maintaining the removable feature (the transparent cover can be detached).

In other embodiments (not shown), the functionality of the base 103 is enhanced, designed as a multifunctional integrated platform. This improves user experience and portability, meeting more comprehensive outdoor needs (such as beaches or camping). Hidden storage compartments are designed inside or on the sides of the base 103 to store accessories like the shower switch 105, showerhead, soap, or even a collapsible basin. The surface of the base 103 features anti-slip textures, with some areas slightly raised to serve as simple footrests for washing feet, or even designed as a foldable small seat. A removable simple filter (e.g., activated carbon/PP cotton) is added before the external cold water supply connector 107 to filter out impurities like sediment, improving shower water quality. Highly integrated, it is convenient to carry and use, enhancing user experience and comfort. While maintaining the core column structure and waterway/sealing design, the base 103, as a supporting structure, is functionally expanded, improving the overall practicality and convenience of the product.

In other embodiments (not shown), the floor-standing base 103 is eliminated and replaced with a wall-mounted or bracket-fixed installation method. This is suitable for scenarios with limited space, uneven ground, or where hanging is required (such as on the side of an RV, small courtyard walls, or sailboat decks). The column (typically the entire lower column 102 or an integrated column) is designed with sturdy hanging lugs or slots on its back. Matching wall-mounted brackets or deck/rail fixing clips are provided to ensure stable installation. The position of the shower head 104 may need adjustment based on the installation height (or an extended hose can be used). This design not only saves floor space but also adapts to more special installation environments, achieving better sunlight exposure angles (e.g., when mounted on a wall). The core integrated heat-collecting/water-storing column, waterway design, and sealing structure are fully retained, with only the support and fixing method changed, thus expanding the application scenarios.

The foregoing description of specific exemplary embodiments of the present disclosure is intended for purposes of illustration and explanation. These descriptions are not meant to limit the present disclosure to the precise forms disclosed, and it is evident that many modifications and variations can be made based on the above teachings. The selection and description of exemplary embodiments aim to explain the specific principles of the present disclosure and their practical application, enabling those skilled in the art to implement and utilize various exemplary embodiments of the present disclosure, as well as different choices and modifications. Any simple modifications, equivalent changes, or refinements made to the above exemplary embodiments should fall within the protection scope of the present disclosure.

## Claims

1. A waterway sealing structure applied to a solar shower column, comprising a column waterway sealing structure, wherein the column waterway sealing structure further comprises:
an upper column connecting cover sleeved at a lower end of an upper column of the solar shower column and provided with four arc-shaped slots extending circumferentially and uniformly spaced, each of the arc-shaped slots having a slot open section and a slot locking section; and
a lower column connecting cover sleeved at an upper end of a lower column of the solar shower column and provided with four arc-shaped buckles extending circumferentially and uniformly spaced, wherein a size of the arc-shaped buckles is compatible with both the slot open section and the slot locking section of the arc-shaped slots; and wherein during the rotation of the upper column connecting cover relative to the lower column connecting cover, the arc-shaped buckles slide from the slot open section to the slot locking section, forming a locking between the upper column connecting cover and the lower column connecting cover; and
an intermediate sealing ring arranged in a sealing ring placement groove inside the lower column connecting cover, wherein when the upper column connecting cover and the lower column connecting cover are locked, the intermediate sealing ring is compressed and wrapped bidirectionally by the upper column connecting cover and the lower column connecting cover, forming column waterway sealing upon connection of the upper column and the lower column.

2. The waterway sealing structure according to claim 1, **characterized in that** the slot open section is located on a rotation start side of the arc-shaped slot, and the slot locking section is located on a rotation end side of the arc-shaped slot; the slot locking section has an outer locking slope and an inner locking slope that are configured to form compression and wrapping on the intermediate sealing ring by the upper column connecting cover and the lower column connecting cover when the arc-shaped buckles slides from the open section to the locking section.

3. The waterway sealing structure according to claim 2, **characterized in that** one of the four arc-shaped slots is provided with a slot protrusion, and correspondingly, one of the four arc-shaped buckles is provided with a buckle recess.

4. The waterway sealing structure according to claim 2, **characterized in that** an outer edge surface of the upper column connecting cover is provided with an upper column connecting cover embossing; an outer edge surface of the lower column connecting cover is provided with a lower column connecting cover indentation and a lower column connecting cover embossing; the upper column connecting cover is at a rotation starting position when the upper column connecting cover embossing is aligned with the lower column connecting cover indentation, and the upper column connecting cover and the lower column connecting cover are at a locking termination position when the upper column connecting cover is rotated clockwise to align the upper column connecting cover embossing with the lower column connecting cover embossing.

5. The waterway sealing structure according to claim 1, **characterized in that** the waterway sealing structure further comprises a pipe waterway sealing structure for connecting a pipe to a male-female thread straight-through connector while forming pipe waterway sealing; the pipe is an aluminum-plastic composite pipe and serves as a cold water pipe installed inside the solar shower column; and the pipe waterway sealing structure further comprises:
an aluminum-plastic pipe clamp sleeved over the pipe and having a protrusion structure that matches a groove at a corresponding position on a surface of the pipe;
an aluminum-plastic pipe gasket that is stepped annular in shape and placed at a base at a male thread inside the male-female thread straight-through connector; and
a plastic locking nut sleeved on over the aluminum-plastic pipe clamp, wherein when the plastic locking nut is rotated and forms a spiral feed with the male thread of the male-female thread straight-through connector, the aluminum-plastic pipe clamp is driven to move downward until the protrusion structure slides into the groove, at which point an end of the pipe abuts against a stepped annular surface of the aluminum-plastic pipe gasket, forming compression and sealing between the pipe and the gasket.

6. The waterway sealing structure according to claim 5, **characterized in that** a female thread of the male-female thread straight-through connector is connected to a valve housing guide connector, and both ends of the valve housing guide connector are off-axis arranged such that a waterway at a transition point forms an axial offset.

7. A solar shower column comprising an upper column and a lower column that are detachably connected, applying the waterway sealing structure according to any one of claims 1 to 6.

8. A waterway sealing structure, comprising:
an upper column and a lower column; and
an upper column connecting cover sleeved at a lower end of the upper column, with at least two arc-shaped slots circumferentially arranged inside, each arc-shaped slot comprising a connected slot open section and a slot locking section; and
a lower column connecting cover sleeved at an upper end of the lower column, with arc-shaped buckles circumferentially arranged inside in a number matching that of the arc-shaped slots; and
an intermediate sealing ring arranged in a sealing ring placement groove of the lower column connecting cover;
wherein the arc-shaped buckles are capable of sliding along the arc-shaped slots from the slot open section to the slot locking section, so that the upper column connecting cover is locked with the lower column connecting cover and the intermediate sealing ring is compressed and wrapped bidirectionally, achieving column waterway sealing.

9. The waterway sealing structure according to claim 8, **characterized in that** the slot locking section has an outer locking slope and an inner locking slope, thereby forming a double-slope structure.

10. The waterway sealing structure according to claim 8, **characterized in that** both the arc-shaped slots and the arc-shaped buckles are four in number and uniformly distributed circumferentially.

11. The waterway sealing structure according to claim 8, **characterized in that** the slot locking section is a flat structure on a rotation end side of the arc-shaped slot.

12. The waterway sealing structure according to claim 8, **characterized in that** at least one arc-shaped slot is provided with a slot protrusion, and a corresponding arc-shaped buckle is provided with a buckle recess.

13. The waterway sealing structure according to claim 8, **characterized in that** an outer edge of the upper column connecting cover is provided with an upper column connecting cover embossing, and an outer edge of the lower column connecting cover is provided with a lower column connecting cover indentation and a lower column connecting cover embossing; the upper column connecting cover is at a rotation starting position when the upper column connecting cover embossing is aligned with the lower column connecting cover indentation, and the upper column connecting cover and the lower column connecting cover are at a locking termination position when the upper column connecting cover embossing is aligned with the lower column connecting cover embossing.

14. The waterway sealing structure according to claim 8, further comprising a pipe waterway sealing structure arranged inside the upper column and the lower column, wherein the pipe waterway sealing structure comprises:
an aluminum-plastic pipe clamp sleeved over the aluminum-plastic composite pipe and provided with a protrusion that matches a groove on a surface of the aluminum-plastic composite pipe;
a stepped annular aluminum-plastic pipe gasket arranged inside a male-female thread straight-through connector; and
a plastic locking nut sleeved over the aluminum-plastic pipe clamp;
wherein the plastic locking nut is rotated to drive the aluminum-plastic pipe clamp to move downward, so that the protrusion is engaged with the groove and compresses the aluminum-plastic pipe gasket to form a seal.

15. The waterway sealing structure according to claim 14, **characterized in that** the male-female thread straight-through connector is connected to a valve housing guide connector that is off-axis arranged.
